# FASCICULE DE BREVET EUROPEEN

(11) **EP 1 405 697 B1**
(45) Date de publication et mention de la délivrance du brevet: **20.04.2005**
(21) Numéro de dépôt: 03292417.7
(22) Date de dépôt: 01.10.2003
(51) Int. Cl.: B25B 23/04, B23P 19/00, E04D 15/04

(54) **Appareil pour le vissage d'elements de fixation**
Vorrichtung zum Schrauben eines Befestigungselements
Apparatus for screwing in fastening elements

(30) Priorité: 02.10.2002 FR 0212211
(43) Date de publication de la demande: 07.04.2004
(73) Titulaire: L.R. ETANCO, F-78400 Chatou Cedex (FR)
(72) Inventeur: Lemontey, Michel, 78580 Maule (FR)
(74) Mandataire: de Saint-Palais, Arnaud Marie

(56) Documents cités:
- DE-U- 29 614 243
- US-A- 4 870 750
- US-A- 5 056 684
- US-A- 5 921 454

## Description

La présente invention concerne un appareil pour le vissage d'éléments de fixation réalisés en au moins deux parties dont l'une est constituée par une pièce d'appui (habituellement une plaquette) tandis que l'autre comprend une vis devant s'engager dans un perçage de la pièce d'appui lors du vissage, voir US 4 870 750.

Elle s'applique notamment, mais non exclusivement, à la fixation de membranes de panneaux isolants et de couverture sur une infrastructure de toit.

On sait que pour assurer une telle fixation, on utilise des pièces d'appui (plaquette) dont la partie centrale est munie d'un orifice servant au passage d'une vis de fixation. Cette pièce peut, par exemple, présenter la forme d'une rondelle en matière plastique moulée ou en tôle emboutie, munie d'un orifice formé au fond d'une cuvette destinée à recevoir la tête de la vis.

Compte tenu du nombre important d'éléments de fixation que l'on a à visser sur une toiture, on a déjà proposé des appareils de vissage automatiques comprenant un magasin dans lequel sont stockés une pluralité d'éléments de fixation et un distributeur apte à transmettre un à un chacun de ces éléments. A cet effet, les vis de fixation sont au préalable (par exemple en usine) engagées dans les perçages des pièces d'appui pour former des ensembles qui sont ensuite reliés les uns aux autres par des moyens de liaison déconnectables pour former une bande servant à alimenter le distributeur.

Ainsi, notamment, le brevet EP 0 600 283 propose un appareil conçu pour des éléments de fixation comprenant une rondelle circulaire munie d'un fût coaxial. Cette rondelle présente une encoche dans laquelle peut venir se clipser le fût d'un dispositif de fixation adjacent. Grâce à cette disposition, les éléments de fixation peuvent être assemblés les uns aux autres pour former une chaîne.

De même, la Demanderesse a déjà proposé un appareil permettant le vissage d'éléments de fixation pouvant présenter des formes et des dimensions différentes sur lesquels sont prévissées des vis de tailles différentes. Cet appareil se trouve décrit dans le brevet FR N° 99 09 830.

Il s'avère que les solutions précédemment décrites présentent l'inconvénient d'utiliser des éléments de fixation dont les vis de fixation sont préengagées (habituellement en usine) dans les perçages des pièces d'appui. Ces éléments de fixation sont donc relativement volumineux et, par conséquent, difficilement conditionnables et stockables. Cet inconvénient se trouve accentué dans le cas où les vis présentent des longueurs importantes.

L'invention a donc plus particulièrement pour but de supprimer ces inconvénients grâce à un appareil de vissage utilisant des éléments de fixation dont les vis et les pièces d'appui sont alimentées séparément, leur assemblage ne s'effectuant qu'au moment du vissage.

Bien entendu, cette solution implique la résolution de problèmes complexes d'orientation et de positionnement de la pièce d'appui à l'emplacement où doit s'effectuer le vissage, puis d'orientation et de centrage de la vis dans l'axe du perçage de la pièce d'appui, avant d'effectuer le vissage.

Pour parvenir à ces résultats, l'invention propose un appareil de vissage d'éléments de fixation réalisés en au moins deux parties dont l'une est constituée par une pièce d'appui tandis que l'autre comprend une vis devant s'engager dans un perçage de la pièce d'appui lors du vissage, cet appareil comprenant des moyens de distribution de pièces d'appui aptes à amener une à une les pièces d'appui initialement empilées dans un magasin dans une zone de vissage, des moyens de distribution de vis permettant d'amener une à une les vis coaxialement à l'emplacement du perçage de la pièce d'appui lorsque celle-ci est positionnée dans la zone de vissage et des moyens de vissage dont au moins un embout de vissage est mobile en translation coaxialement à ladite vis et audit perçage de manière à venir en prise avec la tête de la vis et à effectuer le vissage.

Selon l'invention, cet appareil de vissage est caractérisé en ce que les susdits moyens de distribution de pièces d'appui comprennent :
- des moyens de support et de guidage disposés de manière à recevoir les pièces d'appui délivrées par les moyens de distribution,
- un tiroir mobile en translation horizontale entre les moyens de support et de guidage et les moyens de distribution, ce tiroir étant destiné à déplacer chaque pièce d'appui délivrée par les moyens de distribution, le long des moyens de support et de guidage jusqu'à une zone située au-dessus d'un puits débouchant dans la zone de vissage,
- des éléments de support rétractables situés au-dessous des moyens de support et de guidage et solidaires du tiroir de manière à ce que lorsqu'elle se trouve au-dessus dudit puits, la pièce d'appui tombe sur les éléments de support rétractables, que la pointe de la vis s'engage dans le perçage de cette pièce d'appui et que le retour du tiroir en position initiale provoque la rétraction desdits éléments de support rétractables, cette rétraction provoquant le transfert de la pièce d'appui dans la zone de vissage sous l'effet de son poids et de celui de la vis engagée dans le perçage.

Dans le cas où les pièces d'appui présentent une forme oblongue comportant deux bords longitudinaux parallèles, le tiroir pourra consister en une platine munie d'un évidement allongé de largeur sensiblement égale à celle des pièces d'appui, cet évidement étant axé parallèlement à l'axe de déplacement de la platine.

Dans ce cas, les pièces d'appui, stockées dans le magasin, seront axées obliquement par rapport audit axe et des moyens seront alors prévus pour faire pivoter la dernière pièce d'appui de la pile de manière à lui permettre de s'engager (elle seule) dans l'évidement du tiroir, et à pouvoir être entraînée par ce dernier jusqu'aux éléments de support rétractables.

De même, ces éléments de support rétractables pourront être avantageusement solidaires du susdit tiroir. Dans ce cas, le retour du tiroir à sa position initiale provoquera la rétraction des éléments de support.

Par ailleurs, les vis pourront être préalablement montées de façon détachable sur des profilés de supports souples de manière à être disposées parallèlement les unes aux autres et espacées les unes des autres d'une distance prédéterminée (pas) en formant une bande.

Dans ce cas, le distributeur de vis pourra comprendre :
- Des moyens de guidage de la bande portant les vis à l'entrée du distributeur.
- Des moyens de préhension de la première vis de la bande, qui effectuent un déplacement pour venir en prise sur la vis et un mouvement de translation pour amener cette vis sur une rampe en provoquant son extraction de la bande et en faisant avancer la bande.
- Des moyens de guidage servant à amener la vis qui a été extraite de la bande dans une position coaxiale à l'emplacement de l'orifice de la pièce d'appui dans la zone de vissage.
- Des moyens de retenue rétractables étant prévus pour retenir la vis au-dessus de la zone de vissage tant qu'une pièce d'appui n'est pas présente dans cette zone de vissage.

Avantageusement, une butée escamotable sera en outre prévue pour retenir la vis suivante de la bande lors de l'extraction de la vis précédente et la libérer ensuite.

Selon un mode d'exécution de l'invention, l'appareil de vissage pourra comprendre une structure rigide (châssis) constituée par une embase montée sur des roues et par une glissière verticale sur laquelle coulisse un chariot portant un guidon muni de poignées servant à la fois à assurer les déplacements par roulage de l'appareil et à permettre d'imprimer un déplacement en translation à une visseuse axée verticalement et portant le susdit embout de vissage.

Un mode d'exécution de l'invention sera décrit ci-après, à titre d'exemple non limitatif, avec référence aux dessins annexés dans lesquels :

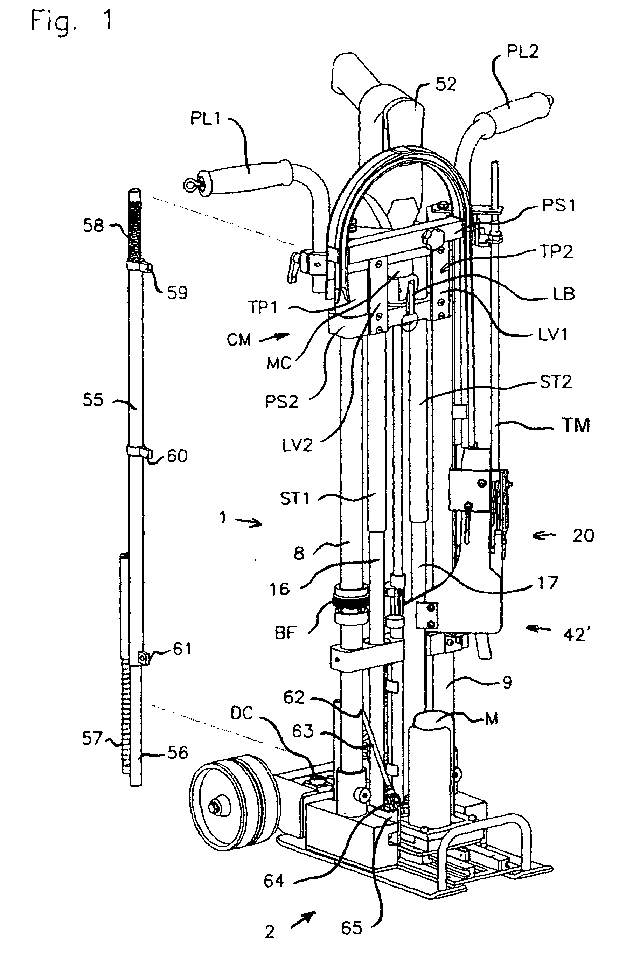

La figure 1 est une vue en perspective d'un appareil de vissage selon l'invention ;
Les figures 2a et 2b sont des vues en perspective trois-quarts avant et trois-quarts arrière du châssis de l'appareil représenté figure 1 ;
Les figures 3 et 4 sont deux vues en perspective, vue de dessus (figure 3) et vue de dessous (figure 4), du mécanisme d'ancrage des pièces d'appui ;
La figure 5 est une vue en perspective du mécanisme de distribution des pièces d'appui montées sur le châssis ;
La figure 6 est une vue en perspective éclatée du magasin de pièces d'appui équipé du sélecteur de ces pièces ;
Les figures 7 et 8 représentent respectivement en vue de dessus (figure 7) et en coupe (figure 8) une pièce d'appui ;
Les figures 9a à 9d sont des représentations schématiques illustrant le principe de fonctionnement du mécanisme d'ancrage des pièces d'appui ;
La figure 10 est une vue partielle, en perspective schématique, d'une bande portant une succession de vis ;
La figure 11 est une vue en perspective du mécanisme de distribution des vis ;
La figure 12 est une vue en perspective du mécanisme servant à assurer l'extraction des vis ;
Les figures 13a, 13b, 13c sont des représentations schématiques permettant d'illustrer le principe de fonctionnement du mécanisme de distribution des vis ;
La figure 14 est une vue du fût de guidage des vis, ainsi que leur dispositif de centrage à billes ;

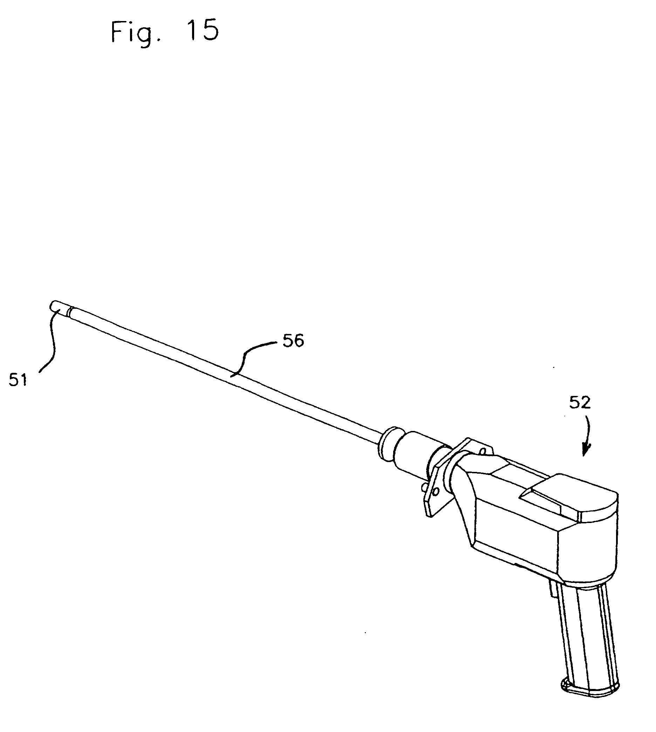

La figure 15 est une vue en perspective de la visseuse équipée de son embout de vissage ;
La figure 16 est une vue en perspective d'une variante d'exécution du mécanisme de distribution des pièces d'appui ;
La figure 17 est une vue partielle, en perspective éclatée, du mécanisme représenté figure 16 ;
La figure 18 est une vue en perspective d'une variante d'exécution du mécanisme de distribution des vis illustrée sur la figure 11.

Tel qu'illustré sur ces figures, l'appareil de vissage comprend un châssis 1 comprenant une embase 2 présentant une forme générale en U comportant deux branches parallèles 3, 4 reliées entre elles d'un côté par deux traverses 5, 6.

Cette embase 2 est montée sur deux paires de roues 7, 7' sensiblement coaxiales à la traverse d'extrémité 5.

Cette embase 2 porte deux colonnes parallèles 8, 9 sensiblement verticales dont les extrémités inférieures sont respectivement fixées dans la partie médiane des deux ailes 3, 4.

Par ailleurs, ces deux colonnes 8, 9 sont reliées entre elles par deux entretoises, à savoir : une entretoise 10 sensiblement en forme de C qui relie leurs extrémités supérieures et une entretoise 11 de forme droite, munie de quatre perçages verticaux, à savoir: deux perçages extérieurs 12, 13 dans lesquels passent et viennent se fixer les colonnes 8, 9 et deux perçages centraux 14, 15 par lesquels passent respectivement deux structures télescopiques 16, 17 renfermant des ressorts qui relient la traverse supérieure 10 à l'embase 2.

Les traverses 10, 11 servent de support à un dispositif de stockage et de guidage 18 d'une pluralité de vis V₁ à V₃ montées de façon détachable sur un support souple S de manière à constituer une bande. Ce dispositif de guidage 18 présente une forme en U partant légèrement en dessous d'une extrémité de la traverse 10. Il comporte une partie incurvée 19 allant d'une extrémité à l'autre de la traverse 10 puis se prolongeant le long de la colonne 9 jusqu'à hauteur d'un mécanisme de distribution de vis 20, seule une partie de ce dispositif de guidage 18 se prolongeant pour venir se fixer sur la traverse inférieure 11.

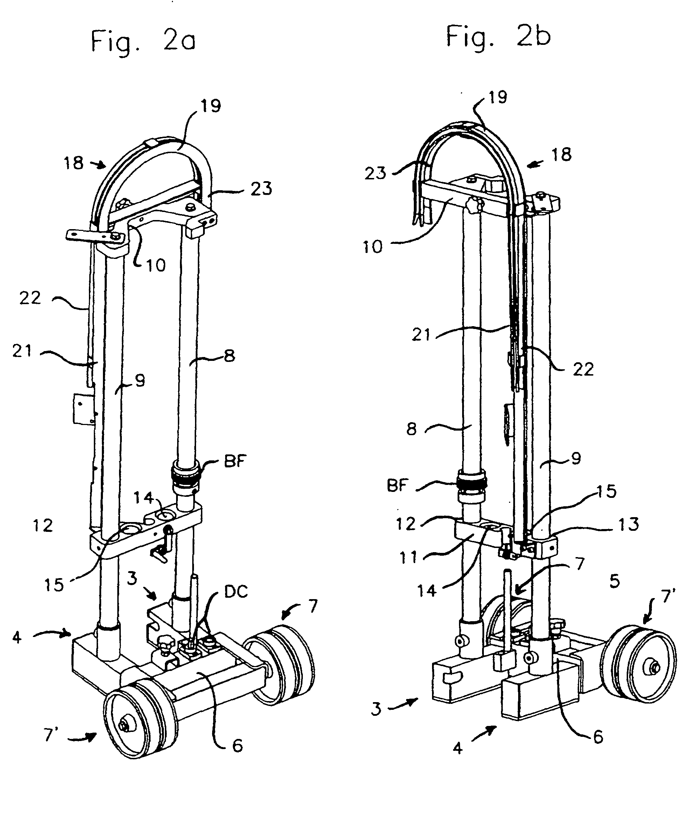

Plus précisément, ce dispositif de guidage comprend deux plats 21, 22 parallèles l'un par rapport à l'autre et séparés l'un de l'autre d'une distance légèrement supérieure au diamètre d'une vis V₁ à V₃, ces deux plats 21, 22 étant fixés par des pattes de fixation solidaires d'une plaque de fond 23 à une distance telle que les têtes des vis V₁ à V₃ puissent aisément se loger et coulisser dans l'espace compris entre la plaque de fond 23 et les deux plats 21, 22 (figures 2a, 2b).

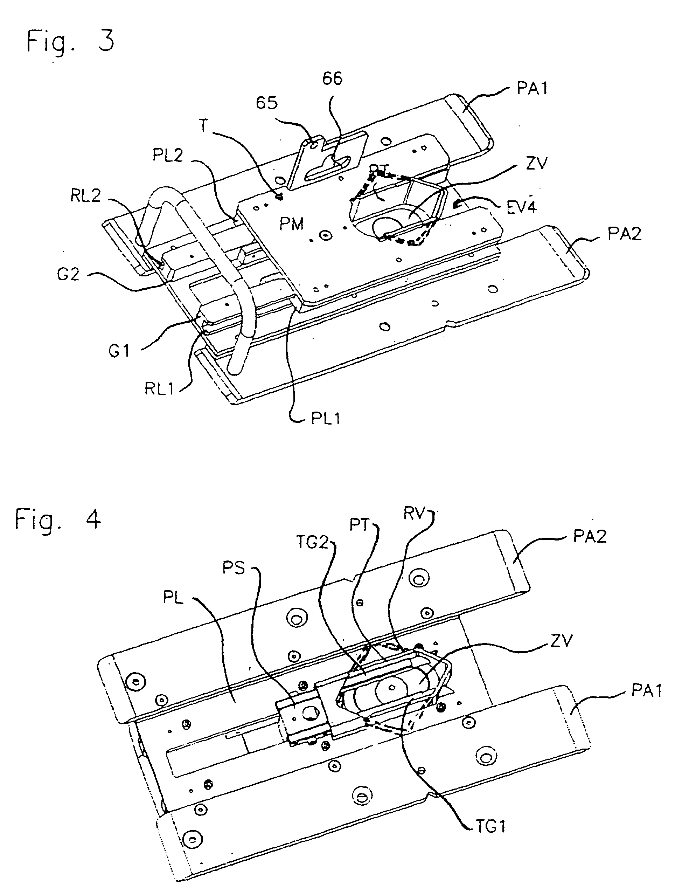

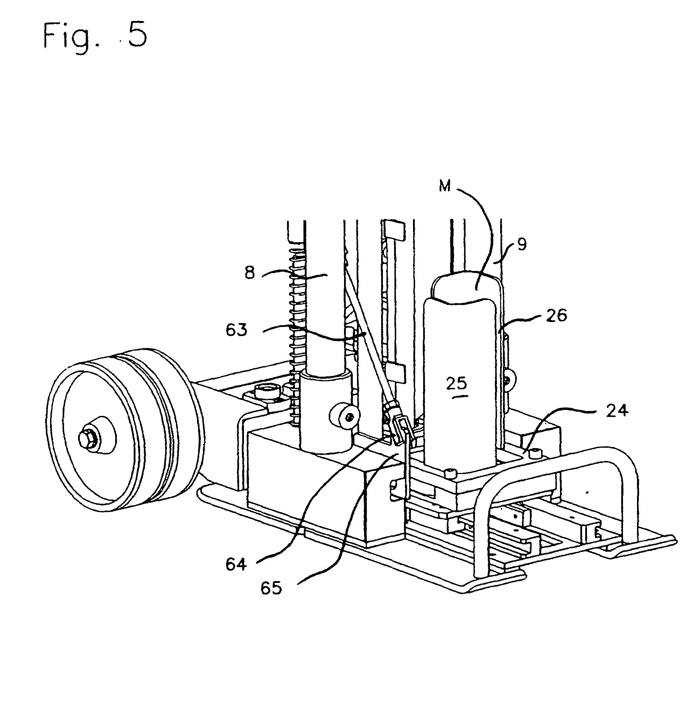

Tel que représenté sur les figures 3 à 6, les moyens de distribution de pièces d'appui sont montés entre les deux branches parallèles 3, 4 de l'embase 2.

Ils font intervenir un magasin M constitué par une platine 24, de forme carrée sensiblement horizontale, munie d'un orifice de passage d'une vis de fixation dans chacune de ses régions angulaires. Cette platine 24 comprend un évidement de forme sensiblement carrée (adaptée aux pièces d'appui à distribuer) dont les bordures sont prolongées, dans deux régions angulaires opposées par deux cornières 25, 26 sensiblement verticales qui constituent des glissières servant à recevoir et à assurer le guidage et le stockage d'une pile de pièces d'appui.

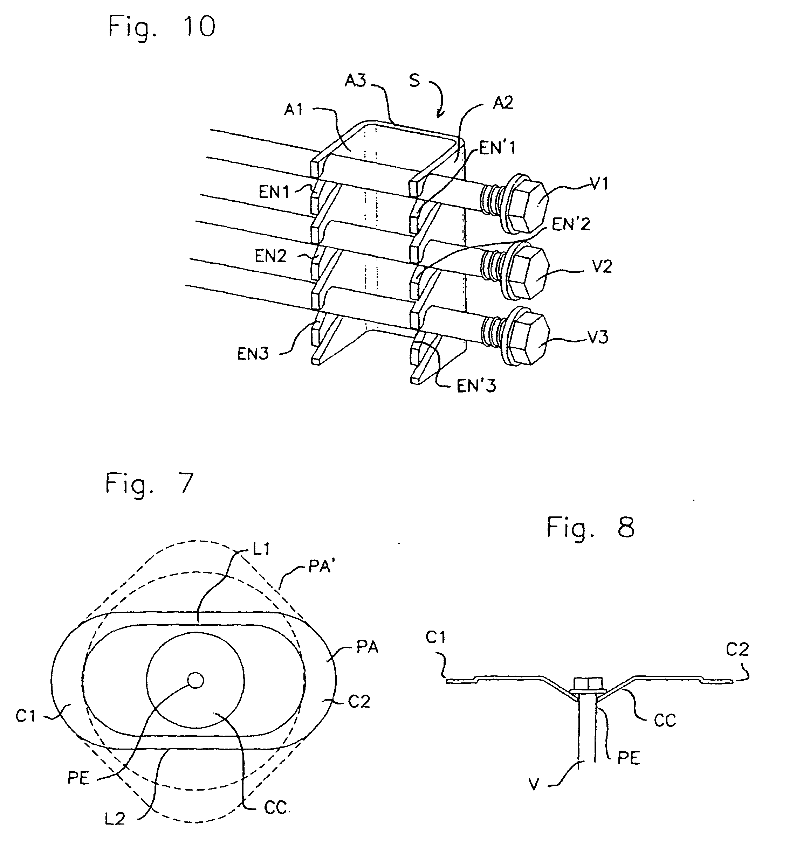

Dans cet exemple, ces pièces d'appui PA réalisées en tôle emboutie présentent une forme oblongue présentant deux côtés longitudinaux parallèles L₁, L₂ et deux côtés transversaux circulaires C₁, C₂. Elles comprennent une cuvette centrale CC au fond de laquelle est disposé un perçage PE servant pour le passage d'une vis V (figures 7 et 8).

Les dimensions de la platine 24 et des cornières 25, 26 sont telles que leurs faces intérieures viennent tangenter les formes circulaires des côtés transversaux C₁, C₂ en assurant leur maintien à l'intérieur du magasin M ainsi délimité. Les espaces entre les cornières 25, 26 facilitent les manipulations des pièces d'appui PA à l'intérieur du magasin M, par exemple lors du chargement.

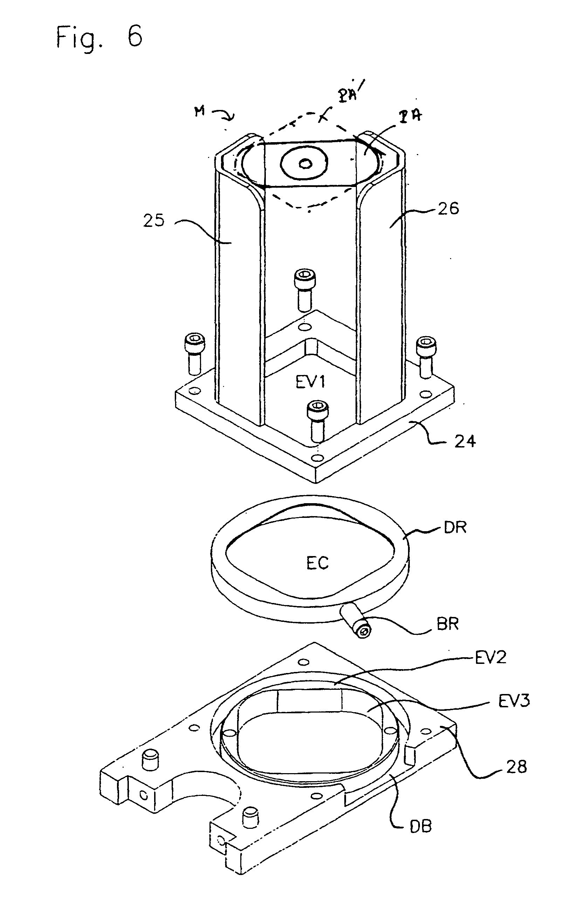

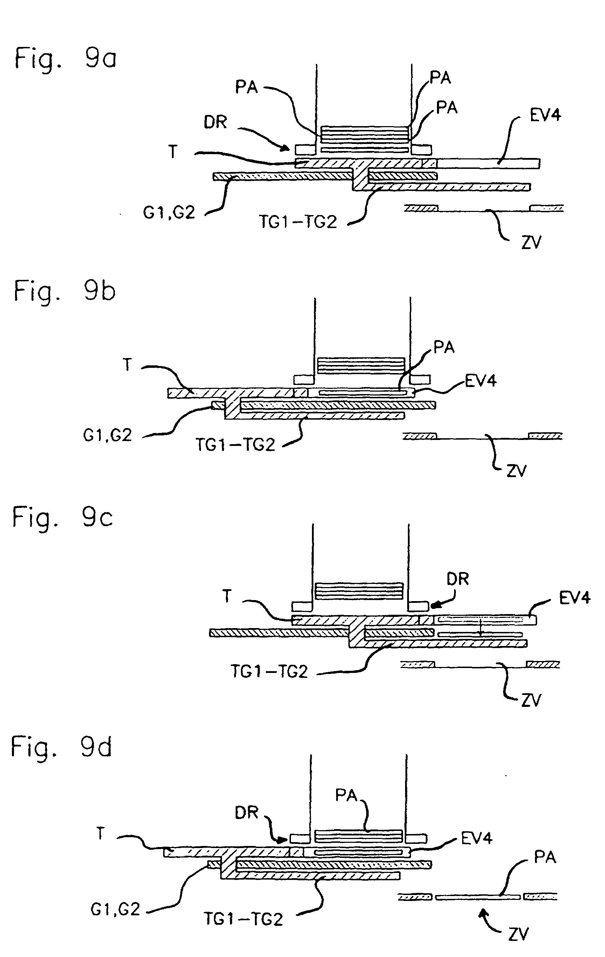

La platine 24 vient se visser à l'aide de vis sur une plaque de support 28 d'un sélecteur de pièces d'appui PA (figure 6).

Cette plaque 28 comprend, au droit de l'évidement EV₁ de la platine 24, un évidement présentant côté platine un appui EV₂ adapté à la plaquette d'appui PA, ici de forme circulaire, et, de l'autre côté, une forme, par exemplaire rectangulaire, EV₃ à bords arrondis, dont la section est légèrement plus grande que la surface générale des pièces d'appui PA.

L'axe longitudinal de cette forme rectangulaire EV₃ s'étend obliquement par rapport à l'axe longitudinal des pièces d'appui PA, lorsqu'elles se trouvent à l'intérieur du magasin M, de sorte que les pièces d'appui PA ne peuvent pas naturellement s'engager dans l'évidement EV₃ sans modification d'orientation.

Cette modification d'orientation est assurée grâce à un disque DR, monté rotatif dans la partie circulaire de l'évidement EV₂, EV₃, et dont la rotation est commandée grâce à une broche radiale BR qui s'engage dans une ouverture oblongue OB pratiquée dans un bord latéral de la plaque 28. Ce disque DR comprend un évidement central EC, de forme adaptée à la plaque d'appui , par exemple de forme carrée, de dimensions sensiblement égales aux dimensions de l'évidement de la platine 24.

Ce disque DR peut donc être entraîné en rotation entre deux positions angulaires, à savoir :
- Une position dans laquelle l'évidement EC est axé obliquement par rapport à l'évidement EV₁, position dans laquelle il vient en butée sur la face inférieure de la première pièce d'appui PA de la pile contenue dans le magasin M.
- Une position dans laquelle l'évidement EC est axé parallèlement à l'évidement EV₁, position dans laquelle la première pièce d'appui PA de la pile s'engage dans l'évidement EC du disque tandis qu'il demeure retenu par les bords parallèles de la forme de l'évidement EV₃.

Lors du retour du disque DR à sa première position angulaire, la pièce d'appui PA contenue dans l'évidement EC du disque DR est amenée dans l'axe de l'évidement EV₃ et tombe au travers de celui-ci sur des glissières G₁, G₂ portant un tiroir T conçu pour amener les pièces d'appui PA jusqu'à un puits PT situé au droit de la zone de vissage ZV (figures 3 et 4).

Dans cet exemple, les deux glissières G₁, G₂ sont portées par une plaque PL fixée au niveau de ses bordures latérales sur deux patins PA₁, PA₂ parallèles, eux-mêmes respectivement fixés sur la face inférieure des ailes parallèles 3, 4 de l'embase 2.

Cette plaque PL comprend un évidement oblong qui s'étend axialement entre les deux glissières et qui présente, au-delà de l'extrémité de ces deux glissières G₁, G₂, une forme correspondant à celle des pièces d'appui PA, située au droit de la zone de vissage ZV.

Au niveau de cette forme, la plaque PL est munie d'un rebord vertical RV qui s'étend dans l'espace compris entre les patins jusqu'au niveau de leur face inférieure en constituant le puits PT dans lequel les pièces d'appui PA peuvent s'engager et descendre jusqu'à ce qu'elles viennent reposer sur le plan sur lequel est disposé l'appareil (ces pièces d'appui PA sont alors en position de vissage).

Le tiroir T est constitué par une plaque PM sur laquelle sont fixés deux profilés latéraux PL₁, PL₂ qui s'engagent dans des rainures longitudinales RL₁, RL₂ formées dans les bords latéraux extérieurs des glissières G₁, G₂.

Cette plaque PM comprend du côté de la zone de vissage ZV un évidement oblong EV₄ de largeur légèrement supérieure à la largeur des pièces d'appui PA. Cet évidement EV₄ se termine d'un côté par une forme arrondie et est ouvert, de l'autre côté, au niveau du bord transversal de la plaque PM située côté zone de vissage ZV.

Sur la face inférieure de la plaque PM est fixée une pièce de support PS sur laquelle sont montées deux tiges de support TG₁, TG₂ aptes à s'engager dans des perçages réalisés dans le rebord vertical RV. L'écartement de ces deux tiges TG₁, TG₂ est légèrement inférieur à la largeur des pièces d'appui PA.

Ces deux tiges TG₁, TG₂ sont destinées à retenir temporairement les pièces d'appui PA lorsqu'elles se trouvent engagées dans le puits délimité par le rebord RV au-dessus de la zone de vissage ZV. Le retrait du tiroir T et, en conséquence, des deux tiges TG₁, TG₂, provoque ensuite la descente de la pièce d'appui PA sur la zone de vissage ZV.

Le fonctionnement de ce distributeur de pièces d'appui PA est le suivant (figures 9a à 9d) :
. Initialement :
   - le disque DR du sélecteur est axé obliquement par rapport au magasin et contient la première pièce d'appui de la pile,
   - le tiroir T est en position avancée, position dans laquelle l'évidement EV₄ se trouve en regard de la zone de vissage ZV (position illustrée sur les figures 3 et 4 et sur la figure 9a).
. Au cours d'une première phase :
   - le tiroir T est amené en position reculée jusqu'à ce que son évidement EV₄ se trouve au droit de l'évidement EV₃ de la plaque 28 du chargeur ; lorsque le tiroir T arrive dans cette position le disque DR a été entraîné en rotation par une action sur la broche BR de manière à ce que l'évidement se trouve orienté parallèlement à l'axe des pièces d'appui PA ; la première pièce d'appui PA de la pile tombe alors dans l'évidement EV₄ et vient en appui sur les glissières G₁, G₂ (figure 9b).
. Au cours d'une deuxième phase :
   - le tiroir T amorce son retour vers sa position avancée, cette action provoque la rotation du disque DR qui amène ainsi la pièce d'appui PA suivante dans l'évidement EC,
   - le tiroir T poursuit son déplacement vers sa position avancée en entraînant la pièce d'appui PA qui coulisse sur les glissières G₁, G₂ grâce à une pièce d'entraînement solidaire de la plaque PM,
   - en fin de course, la pièce d'appui PA se trouve au droit du puits PT de la plaque support PL des glissières et tombe dans ce puits PT en étant retenue par les tiges TG₁, TG₂ au-dessus de la zone de vissage ZV (figure 9c).
. Au cours d'une troisième phase (vissage) :
   - le tiroir T est ramené en position reculée ; au cours de ce déplacement, les tiges TG₁, TG₂ s'extraient du puits PT dans lequel elles s'étaient précédemment engagées et libèrent la pièce d'appui PA qui tombe dans la zone de vissage ZV ; le vissage peut alors être effectué (figure 9d).

Comme représenté sur la figure 10, les vis V₁ à V₃ utilisées pour ce vissage sont montées en bande sur une pièce profilée de support S en matière plastique souple. Ce profilé présente une section en forme de U comprenant deux ailes A₁, A₂ parallèles reliées par l'un de leurs bords par une âme A₃.

Ces deux ailes comprennent une pluralité de couples d'encoches EN₁, EN₁,-EN₂, EN'₂-EN₃, EN'₃ successifs dans lesquels viennent se clipser les tiges des vis V₁, V₂, V₃ (habituellement de longueur importante).

Avantageusement, les bords de ces encoches pourront présenter des formes étagées de manière à permettre le montage de vis de sections différentes.

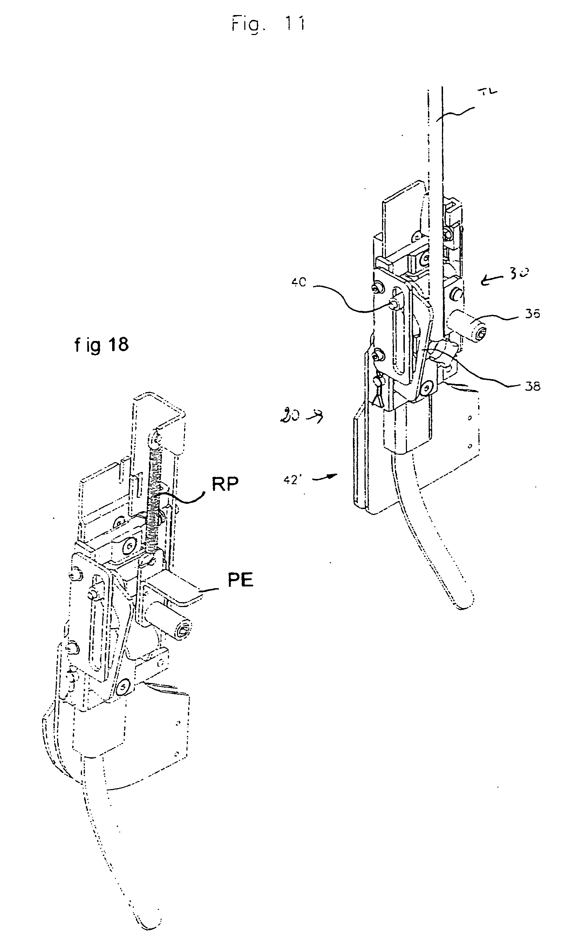

Comme précédemment mentionné, cette bande de vis s'engage et est guidée dans le dispositif de guidage 18 jusqu'au mécanisme distributeur de vis 20 illustré sur les figures 11 à 13c.

Ce distributeur fait intervenir un extracteur de vis 30 consistant en une pièce d'extraction 31 de section sensiblement en forme de U, dont les deux ailes 32, 33 comprennent au niveau de leurs bordures deux encoches respectives coaxiales 34, 35. Cette pièce 31 est dimensionnée de manière à ce que les deux ailes 32, 33 puissent s'engager de part et d'autre de la pièce profilée de support S de manière à ce que la tige de la première vis V₃ de la bande puisse s'introduire dans les encoches 34, 35.

Cette pièce 31 est montée pivotante contre l'action de moyens élastiques 36, sur un coulisseau 37 mobile en translation verticale, guidé par une glissière solidaire du dispositif de guidage des vis et donc de la structure fixe de l'appareil.

Cet extracteur comprend en outre une pièce de butée consistant en un levier oscillant 38 présentant un bec 39, le basculement de ce levier 38 étant assuré grâce à un profil de came prévu dans ce levier 38, à l'opposé du bec 39, dans lequel vient circuler une broche 40 solidaire du coulisseau 37 : De ce fait, au cours de son déplacement en translation, le coulisseau 37 provoque un basculement du levier 38 dont le bec s'engage dans le volume de passage des vis de manière à retenir la vis suivante V₂.

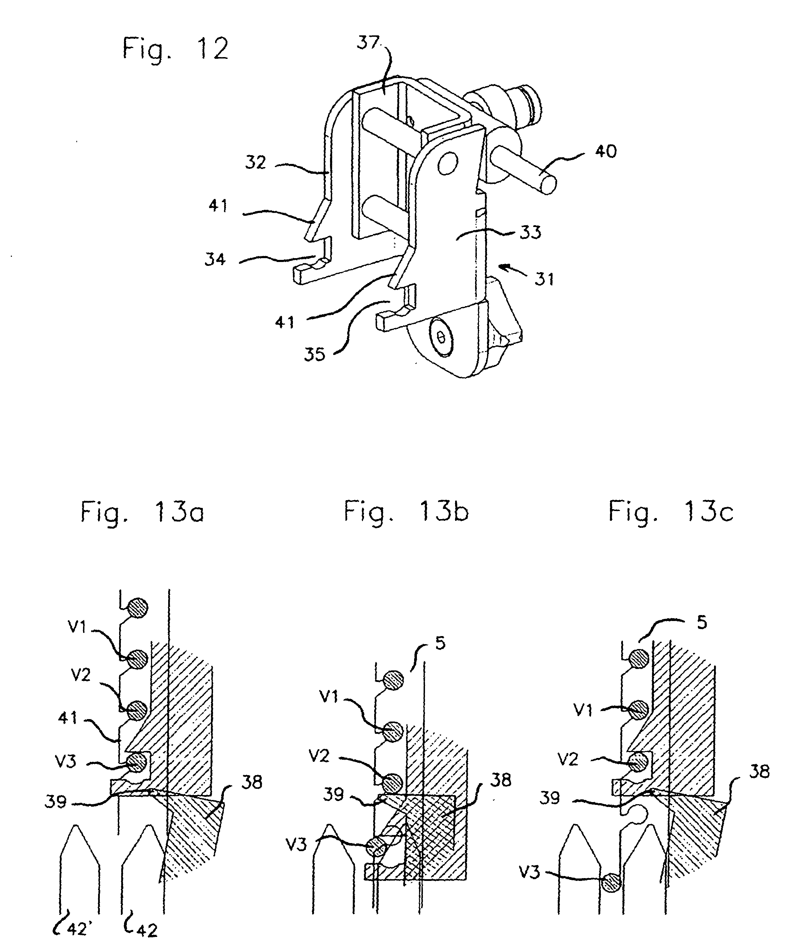

Le fonctionnement de cet extracteur se trouve illustré sur les figures 13a à 13c sur lesquelles on a représenté uniquement l'une des deux ailes 32, 33 de la pièce d'extraction 31 munie de son encoche 34, 35, le bec 39 du levier de butée 38 et l'extrémité de la bande de vis.

Au cours d'une première phase, l'extrémité de la bande est engagée dans le distributeur jusqu'à ce que la tige de la première vis V₃ de la bande s'engage dans les encoches 34, 35 (figure 13a). A cet effet, la partie supérieure de l'aile de la pièce d'extraction 31 présente un biseau 41 se terminant au niveau de l'encoche 34, 35 tandis que la partie inférieure de cette aile, située en dessous de l'encoche, est légèrement proéminente. Le passage de la tige sur le biseau 41 provoque un léger basculement de la pièce d'extraction 31 par rapport au coulisseau 37 contre l'action des moyens élastiques 36. L'engagement de la tige dans les encoches 34, 35 se trouve ensuite confirmé par le retour de la pièce à sa position initiale.

Au cours d'une seconde phase, l'extracteur 30 entame un déplacement en translation vers le bas en entraînant la vis V₃ ainsi que le profilé de support S.

Au cours de ce déplacement, la broche 40 provoque le basculement du levier 38 dont le bec 39 s'engage dans le volume de passage des vis V₁ à V₃ pour retenir la vis suivante V₂.

Parallèlement, la tige de la vis V₃ coulisse sur l'extrémité biseautée 42 d'un dispositif de guidage des vis situé en aval du dispositif d'extraction et se dégage de l'encoche EN₃, EN'₃.

La vis V₃ ainsi libérée est guidée par sa tête jusqu'à s'engager dans un fût de centrage et de guidage tubulaire 43 coaxial au perçage de la pièce d'appui PA disposée dans la zone de vissage ZV.

Au cours d'une troisième phase, l'extracteur 30 retourne à sa position initiale en provoquant le retrait du bec 39, puis l'engagement de la tige de la vis V₂ dans les encoches 34, 35, en glissant sur le biseau 41. Le maintien de la vis V₂ dans les encoches 34, 35 est assuré par l'action du moyen élastique 36.

Un nouveau cycle peut être alors initié. Une fois dans le fût de centrage et de vissage 43, les vis sont tout d'abord maintenues suspendues par la tête grâce à un dispositif de retenue comprenant deux leviers articulés 45, 46 sur le fût 43 et qui comprennent, à l'opposé de leur axe d'articulation, un bec de retenue 47, 48 destiné à venir en prise sous la tête de la vis V₃. Le maintien des deux leviers 45, 46 dans cette position est assuré par deux contrepoids respectifs 49, 50.

La libération de la vis V₃ est ensuite obtenue par l'action de l'embout de vissage 51 de la visseuse 52, lorsque celle-ci est amenée en position de vissage.

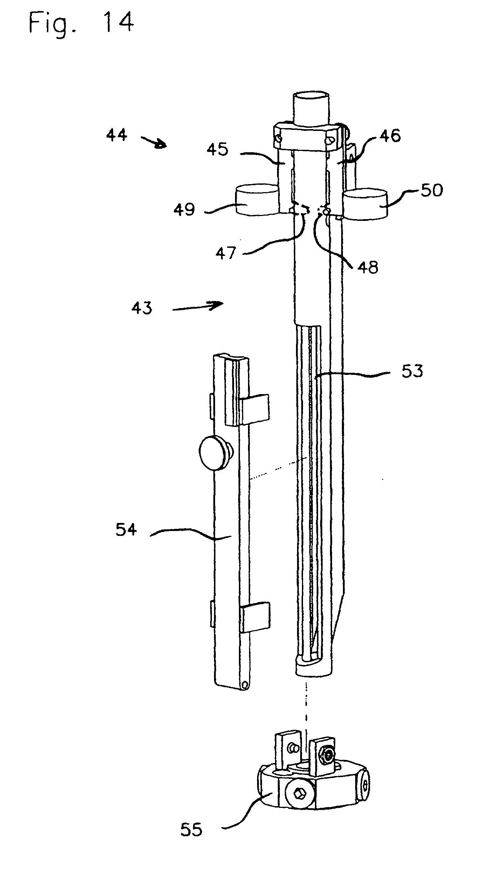

Dans l'exemple représenté sur la figure 14, le fût 43 comprend une fente longitudinale 53 refermée par un couvercle basculant 54 de manière à pouvoir accéder au volume intérieur du fût, notamment pour extraire une vis non encore utilisée.

L'extrémité inférieure du fût 43 s'engage dans un dispositif de centrage 55 de la vis pouvant par exemple comprendre quatre poussoirs radiaux (ou billes), opposés deux à deux, et sollicités par des ressorts de manière à agir sur la vis V₃ pour la maintenir centrée même dans le cas où elle présente des variations de diamètre (notamment au niveau de la tête).

Ce moyen de centrage permet de faire en sorte que la pointe de la vis V₃ atteigne le perçage PE situé dans le fond de la cuvette CC de la pièce d'appui PA avec un maximum de précision, la forme incurvée de la cuvette CC assurant la fin de ce centrage.

La visseuse 52 utilisée dans cet exemple est une visseuse électrique portative de type classique sur laquelle est montée une tige 56 portant un embout de vissage 51 approprié à la tête de la vis V₃.

Cette visseuse 52 est fixée au niveau de son nez sur un chariot CM mobile verticalement formé de deux pièces de support horizontales PS₁, PS₂, de formes parallélépipédiques entretoisées par deux lames de liaison verticales LV₁, LV₂ ainsi que par deux tubes paliers verticaux TP₁, TP₂ qui s'engagent dans des perçages traversants correspondant prévus dans les pièces support PS₁, PS₂. Ces tubes paliers TP₁, TP₂ sont montés coulissants sur les deux colonnes 8, 9.

Ces deux pièces de support PS₁, PS₂ comprennent en outre deux couples de perçages verticaux coaxiaux dans lesquels s'engagent et sont fixées les extrémités supérieures des deux structures télescopiques ST₁, ST₂.

Elles sont en outre entretoisées par un manchon tubulaire central MC qui s'engage dans deux perçages coaxiaux prévus dans les deux pièces PS₁, PS₂.

Ce manchon tubulaire MC est destiné à recevoir le nez de la visseuse 52, le verrouillage de ce nez étant obtenu par coincement grâce à un système à came et à levier basculant LB.

Grâce à ces dispositions, la visseuse 52 est déplacée en translation verticale vers le bas de manière à ce que l'embout de vissage 51 vienne en prise sur la tête de la vis se trouvant dans le fût de centrage 43 et assure le vissage de la vis.

Bien entendu, ce processus doit s'effectuer en synchronisme avec le fonctionnement du distributeur de pièces d'appui et le distributeur de vis.

Pour parvenir à ce résultat, l'invention utilise les déplacements du chariot CM le long des colonnes 8, 9 pour commander séquentiellement les divers éléments des deux distributeurs.

A cet effet, elle prévoit, pour l'actionnement du distributeur de pièces d'appui PA, un tube d'entraînement 55 monté coulissant le long d'une tige verticale 56 reliant l'entretoise 10 qui solidarise l'extrémité supérieure des colonnes 8, 9 à l'une des deux ailes 3, 4 de l'embase 2. Ce tube d'entraînement 55 se trouve ramené à une position intermédiaire par deux ressorts de rappel 57, 58 agissant sur chacune de ses extrémités ; il comprend deux butées, à savoir :
- une butée supérieure 59 destinée à coopérer avec la pièce de support inférieure PS₂ du chariot CM pour ramener le tube d'entraînement 55 en position haute de repos, et
- une butée inférieure 60 destinée à coopérer avec la pièce de support inférieure PS₂ du chariot CM en fin de course vers le bas pour déplacer le tube d'entraînement 55 vers le bas contre l'action du ressort 57.

L'extrémité inférieure du tube d'entraînement 55 comprend une protubérance externe 61, munie d'un perçage, sur laquelle vient s'engager une chape d'articulation 62, dont l'axe passe par ledit perçage, montée à l'extrémité d'une biellette 63.

L'autre extrémité de la biellette 63 vient s'articuler, également par une chape d'articulation 64, sur une aile latérale 65 du tiroir T du distributeur de pièces d'appui PA. Cette aile transversale 65 comprend un évidement oblong 66 dans lequel s'engage la broche BR du disque du sélecteur DR des pièces d'appui PA.

L'agencement de la biellette 63 est tel que, lorsque le chariot CM est déplacé vers le bas à partir de sa position de repos, position dans laquelle le tube d'entraînement 55 est maintenu en position haute par la butée 59 qui porte sur la pièce de support PS₂, le tube 55 descend sous l'effet de son propre poids en entraînant la biellette 63 qui pousse le tiroir T en position reculée.

Vers la fin de sa course vers le bas, le tube vient porter sur le ressort 57.

En fin de course du chariot CM, la butée 60 se trouve entraînée vers le bas par la pièce de support PS₂ inférieure et provoque un déplacement du tube d'entraînement 55 contre l'action du ressort 57.

Ce déplacement du tiroir T provoque un pivotement complet du disque du sélecteur DR et, en conséquence, la descente d'une pièce d'appui PA sur les glissières G₁, G₂.

Parallèlement, dans sa course vers le bas, le chariot CM commande le déplacement du coulisseau 37 du distributeur de vis grâce à une tige de liaison TL solidaire du chariot CM.

Ce déplacement du coulisseau 37 provoque l'extraction d'une vis qui, après avoir été guidée par les glissières 42', s'engage dans le fût 43 tout en étant retenue temporairement par la tête grâce aux becs 47, 48 des leviers 49, 50.

Avec un léger décalage, l'embout 51 de la tige 56 de la visseuse 52 vient s'engager à l'entrée du fût 43. Le passage de l'embout 51 entre les masselottes 45, 46 libère la vis V₃. Sous l'effet de son poids, la vis coulisse dans le fût 43 jusqu'à ce que sa pointe s'engage dans le perçage PE de la pièce d'appui PA disposée dans la zone de vissage ZV.

La forme en cuvette CC de cette pièce d'appui PA assure alors un autocentrage de la pointe. L'embout 51 de la visseuse 52, qui coulisse également dans le fût 43, vient alors en prise sur la tête de la vis. Le vissage de la vis peut alors être exécuté.

En fin de vissage, le chariot CM est en position basse fin de course définie par une butée fin de course réglable BF, position dans laquelle il comprime les ressorts ST₁, ST₂. Le relâchement du chariot CM par l'opérateur provoque alors son retour en position haute.

Au cours de ce retour, le déplacement du chariot CM provoque la réalisation par les distributeurs, de la deuxième partie de leur cycle de fonctionnement (retour du tiroir T en position reculée, du disque du sélecteur DR dans sa position initiale et de l'extracteur de vis en prise avec la vis V₂ suivante).

Avantageusement, pour faciliter son déplacement ainsi que celui de l'ensemble de l'appareil, le chariot CM pourra comprendre deux poignées latérales PL₁, PL₂ ajustables en hauteur et en orientation.

De même, l'embase pourra comprendre dans sa partie supérieure une ou plusieurs douilles DC de conformation appropriée pour permettre l'extraction par dévissage de l'embout 51 de manière à ce que l'usage normal de l'appareil n'exige pas l'emploi d'outils.

L'appareil précédemment décrit s'applique d'une façon particulièrement avantageuse à la fixation d'une membrane d'étanchéité sur un revêtement d'isolation posé sur des éléments de couvertures, portés par une charpente. Dans ce cas, les vis pourront présenter une longueur relativement importante et posséder une pointe foret apte à percer des couvertures en bac acier et présenter un double filet dont un filet autotaraudeur.

Cet appareil est particulièrement ergonomique, l'utilisateur demeurant debout, et permet d'obtenir une très grande productivité. Il assure une bonne qualité de pose et un parfait maintien des pièces d'appui dans l'alignement avec une orientation de la vis perpendiculaire au support. Le réglage est rapide et ne nécessite pas d'outil. L'usure de l'embout de vissage est réduite grâce au bon alignement des vis. En outre, les mécanismes utilisés sont d'une grande fiabilité et d'un entretien facile. La position debout de l'opérateur lui permet d'avoir une bonne vue d'ensemble du chantier.

Bien entendu, l'invention ne se limite pas au mode d'exécution précédemment décrit.

Ainsi, le mécanisme de distribution des pièces d'appui pourra être conçu de manière à permettre l'utilisation de pièces d'appui de formes et de dimensions différentes.

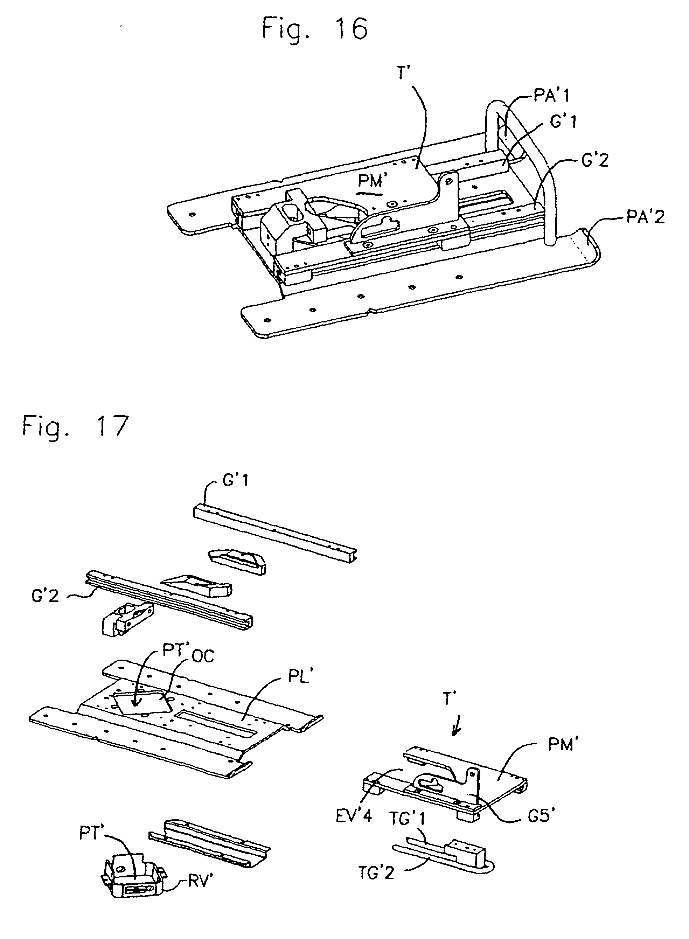

A titre d'exemple, les figures 16 et 17 montrent un mécanisme de distribution interchangeable pouvant se monter (ou s'extraire) très facilement sur (ou de) l'embase 2 sans que cette opération nuise à la précision et à la fiabilité de l'ensemble de l'appareil.

Ce mécanisme fait intervenir d'une façon analogue à celui qui se trouve décrit sur les figures 3 à 6 :
- une platine 24 présentant un évidement de forme sensiblement carré supportant deux glissières 25, 26 en forme de cornière qui constitue un magasin apte à assurer le guidage et le stockage d'une pile de pièces d'appui PA ; les dimensions de l'évidement EV₁ sont déterminées en fonction de celles des pièces d'appui PA à distribuer,
- un sélecteur de pièces d'appui PA comprenant une plaque 28 comportant un évidement qui présente, du côté platine 24, un appui EV₂ adapté à la plaquette d'appui PA, de forme circulaire et, de l'autre côté, une forme carrée EV₃ à bords arrondis, dont la section est légèrement plus grande que la surface projetée des pièces d'appui,
- un disque DR monté rotatif dans la partie circulaire de l'évidement EV₂, EV₃ et dont la rotation est assurée par une broche radiale BR qui s'engage dans une ouverture oblongue OB d'un bord latéral de la plaque 28 ; ce disque DR comprend un évidement central EC coaxial de forme carrée et de dimensions sensiblement égales aux dimensions des pièces d'appui (figure 6),
- un tiroir T' mobile au-dessous de la plaque 28 grâce à deux glissières G'₁, G'₂, pour amener les pièces d'appui PA jusqu'à un puits PT' situé au droit d'une zone de vissage,
- une plaque PL' qui porte les glissières G'₁, G'₂ et qui est elle-même supportée par les patins PA'₁, PA'₂, cette plaque PL' portant un évidement de forme correspondant à celle des pièces d'appui PA qui s'étend entre les deux glissières coaxialement à la zone de vissage ZV ; cette plaque est munie d'un rebord vertical RV' qui s'étend dans l'espace compris entre les patins PA'₁, PA'₂ jusqu'au niveau de leur face inférieure en constituant le puits PT' dans lequel les pièces d'appui PA peuvent s'engager et descendre jusqu'à ce qu'elles reposent sur le plan sur lequel est disposé l'appareil.

La plaque PM' qui constitue le tiroir T' comprend, du côté de la zone de vissage ZV, un évidement oblong EV'₄ de largeur légèrement supérieure à la largeur des pièces d'appui PA. Cet évidement EV'₄ se termine par une forme arrondie et est ouvert, de l'autre côté, au niveau du bords transversal de la plaque PM' située du côté de la zone de vissage.

D'une façon analogue à la précédente, la plaque PM' porte deux tiges TG'₁, TG'₂ destinées à retenir temporairement les pièces d'appui PA, lorsqu'elles se trouvent engagées au-dessous de la zone de vissage, le retrait du tiroir T' provoquant ensuite la descente de la pièce d'appui PA sur cette zone.

Toutefois, à la différence du mode d'exécution précédemment décrit :
- La forme de l'extrémité intérieure de l'évidement EV'₄ prévu sur la plaque PM est celle d'un triangle rectangle isocèle à angles arrondis dont la bissectrice est parallèle à l'axe de déplacement du tiroir. Ce triangle correspond sensiblement à la moitié de la forme carrée du sélecteur de pièces d'appui.
- La plaque PL' comprend au droit de la zone de vissage un orifice carrée OC dont les dimensions correspondent sensiblement à la forme carrée de l'évidement EC du sélecteur.
- L'aile latérale 65' du tiroir est dimensionnée de manière à ce que la position du perçage par lequel passe l'axe d'articulation de l'extrémité de la biellette 63 soit indépendant des dimensions du mécanisme de distribution (de manière à permettre l'interchangeabilité de mécanismes conçus pour des plaques d'appui PA différentes).
- Les patins PA'₁, PA'₂ sont équipés de moyens de fixation et de moyens de calage permettant une fixation précise et facilement démontable du mécanisme de distribution sur la face inférieure des ailes parallèles 3, 4 de l'embase.

Grâce aux dispositions précédemment décrites, il devient possible d'utiliser dans un même mécanisme de distribution des plaques d'appui présentant des formes polygonales différentes, notamment des platines de forme carrée ou rectangulaire.

Cette propriété est illustrée sur la figure 6 qui montre une plaque d'appui PA' de forme carrée et une plaque d'appui PA de forme rectangulaire à l'intérieur du sélecteur de pièce d'appui, étant entendu que ces pièces d'appui PA, PA' se retrouveront dans des positions analogues dans les différents postes du mécanisme de distribution.

Un autre avantage de ces dispositions consiste en ce qu'il est possible de réaliser des mécanismes de distribution destinées à des pièces d'appui PA, PA' de dimensions différentes, pouvant se monter directement, sans aucune adaptation sur l'appareil, la zone de vissage de ces mécanismes venant se centrer de façon précise sur l'embout de vissage de l'appareil tandis que l'entraînement du tiroir T ne nécessite aucune adaptation de la biellette 63 pour les raisons précédemment évoquées.

Par ailleurs, comme illustré sur la figure 18, le coulisseau 37 du distributeur de vis 20 pourra être entraîné par une pièce d'entraînement PE éventuellement escamotable, sur laquelle peut venir porter une butée entraînée par le chariot mobile MC.

Dans ce cas, la tige TL prévue dans l'exemple précédent est supprimée et un ressort de rappel RP est prévu entre le coulisseau 37 et une pièce de support PS située dans le prolongement de la glissière sur lequel se déplace le coulisseau 37.

L'avantage de cette solution réside dans le fait qu'elle permet l'usage de vis de type différent (longueur et diamètre).

## Revendications

1. Appareil pour le vissage d'éléments de fixation réalisés en au moins deux parties dont l'une est constituée par une pièce d'appui (PA) tandis que l'autre comprend une vis (V₁ à V₃) devant s'engager dans un perçage (PE) de la pièce d'appui (PA) lors du vissage, cet appareil comprenant des moyens de distribution de pièces d'appui (PA) aptes à amener une à une les pièces d'appui (PA) initialement empilées dans un magasin dans une zone de vissage (ZV), des moyens de distribution de vis permettant d'amener une à une les vis (V₁ à V₃) coaxialement à l'emplacement du perçage (PE) de la pièce d'appui (PA) lorsque celle-ci est positionnée dans la zone de vissage (ZV) et des moyens de vissage dont au moins un embout de vissage (51) est mobile en translation coaxialement à ladite vis et audit perçage (PE) de manière à venir en prise avec la tête de la vis et à effectuer le vissage,
**caractérisé en ce que** les susdits moyens de distribution de pièces d'appui (PA) comprennent :
- des moyens de support et de guidage disposés de manière à recevoir les pièces d'appui (PA) délivrées par les moyens de distribution,
- un tiroir (T) mobile en translation horizontale entre les moyens de support et de guidage (G₁, G₂) et les moyens de distribution, ce tiroir étant destiné à déplacer chaque pièce d'appui délivrée par les moyens de distribution, le long des moyens de support et de guidage jusqu'à une zone située au-dessus d'un puits débouchant dans la zone de vissage (ZV),
- des éléments de support rétractables (TG₁, TG₂) situés au-dessous des moyens de support et de guidage (G₁, G₂) et solidaires du tiroir de manière à ce que lorsqu'elle se trouve au-dessus dudit puits, la pièce d'appui tombe sur les éléments de support rétractables, que la pointe de la vis s'engage dans le perçage de cette pièce d'appui et que le retour du tiroir en position initiale provoque la rétraction desdits éléments de support rétractables, cette rétraction provoquant le transfert de la pièce d'appui (PA) dans la zone de vissage (ZV) sous l'effet de son poids et de celui de la vis engagée dans le perçage.

2. Appareil selon la revendication 1,
**caractérisé en ce que** les pièces d'appui (PA) présentent une forme oblongue comportant deux bords longitudinaux parallèles, et **en ce que** le tiroir (T) consiste en une platine munie d'un évidement allongé (EV₄) de largeur sensiblement supérieure à celle des pièces d'appui (PA), cet évidement étant axé parallèlement à l'axe de déplacement de la platine.

3. Appareil selon la revendication 2,
**caractérisé en ce que** les pièces d'appui (PA), stockées dans le magasin (M ; 24 à 26), sont axées obliquement par rapport audit axe et des moyens sont alors prévus pour faire pivoter la première pièce d'appui (PA) de la pile de manière à lui permettre de s'engager (elle seule) dans l'évidement du chariot (EV₄), et à pouvoir être entraînée par ce dernier jusqu'aux éléments de support rétractables (TG₁, TG₂).

4. Appareil selon la revendication 3,
**caractérisé en ce que** le susdit magasin, les moyens de distribution et l'évidement du chariot sont conçus de manière à assurer la distribution de pièces d'appui de forme oblongue et/ou de forme carrée.

5. Appareil selon l'une des revendications précédentes,
**caractérisé en ce que** les vis (V₁ à V₃) sont préalablement montées de façon détachable sur des profilés de supports souples (S) de manière à être disposées parallèlement les unes aux autres et espacées les unes des autres d'une distance prédéterminée (pas) en formant une bande.

6. Appareil selon la revendication 5,
**caractérisé en ce que** le distributeur de vis comprend :
- des moyens de guidage du profilé de support (S) portant les vis à l'entrée du distributeur,
- des moyens de préhension de la première vis (V₃) de la bande, qui effectuent un déplacement pour venir en prise sur la vis et un mouvement de translation pour amener cette vis sur une rampe (42) en provoquant son extraction de la bande et en faisant avancer le profilé (S),
- des moyens de guidage (42') servant à amener la vis (V₃) qui a été extraite de la bande dans une position coaxiale à l'emplacement du perçage (PE) de la pièce d'appui (PA) dans la zone de vissage (ZV),
- des moyens de retenue rétractables (45, 46) étant prévus pour retenir la vis (V₃) au-dessus de la zone de vissage (ZV) tant qu'une pièce d'appui (PA) n'est pas présente dans cette zone de vissage (ZV).

7. Appareil selon la revendication 6,
**caractérisé en ce que** les susdits moyens de préhension comprennent une pièce d'extraction (31) de section en forme de U dont les ailes (32, 33) comprennent au niveau de leurs bordures deux encoches respectives coaxiales (34, 35), cette pièce (31) étant dimensionnée de manière à ce que les deux ailes (32, 33) puissent s'engager de part et d'autre des profilés de support (S) de manière à ce que la tige de la première vis (V₃) de la bande puisse s'introduire dans les encoches.

8. Appareil selon la revendication 7,
**caractérisé en ce que** la susdite pièce d'extraction (31) est montée pivotante contre l'action de moyens élastiques (36) sur un coulisseau (37) mobile en translation verticale, guidé par une glissière solidaire de la structure fixe de l'appareil.

9. Appareil selon l'une des revendications 6 à 8,
**caractérisé en ce que** le distributeur de vis comprend en outre une pièce de butée consistant en un levier oscillant (38) présentant un bec (39), dont le basculement est assuré grâce à un profil de came prévu dans le levier (38), sur lequel vient circuler une pièce (40) solidaire de la pièce d'extraction (31).

10. Appareil selon l'une des revendications précédentes,
**caractérisé en ce qu'**il comprend une structure rigide (châssis) constituée par une embase montée sur des roues et par une glissière verticale sur laquelle coulisse un chariot portant un guidon muni de poignées servant à la fois à assurer les déplacements par roulage de l'appareil et à permettre d'imprimer un déplacement en translation à une visseuse axée verticalement et portant le susdit embout de vissage.

11. Appareil selon la revendication 10,
**caractérisé en ce que** le susdit embout de vissage est monté sur une tige pour former un ensemble qui s'engage et coulisse dans un fût de centrage et de guidage tubulaire coaxial au perçage de la pièce d'appui disposée dans la zone de vissage (ZV), et dans lequel débouche un dispositif de guidage des vis situé en aval du susdit dispositif d'extraction.

12. Appareil selon la revendication 11,
**caractérisé en ce que** le susdit fût comprend, dans sa partie supérieure, des moyens de retenue temporaire de la tête des vis.

13. Appareil selon l'une des revendications 1 et 12,
**caractérisé en ce que** le susdit fût comprend un dispositif de centrage des vis comprenant des poussoirs radiaux sollicités par des ressorts.

14. Appareil selon l'une des revendications 10 à 13,
**caractérisé en ce que** les susdits moyens de distribution de pièces d'appui présentent une structure modulaire interchangeable et comprend des moyens permettant leur montage et démontage rapides sur le susdit châssis, de manière à permettre l'usage de pièces d'appui de formes et de dimensions différentes.

## Patentansprüche

1. Vorrichtung zur Verschraubung von Befestigungselementen, die aus mindestens zwei Teilen gebildet sind, wobei eines dieser Teile aus einem Abstützelement besteht (PA), während das andere Teil mit einer Schraube (V₁ bis V₃) versehen ist, um bei der Verschraubung in eine Bohrung (PE) eines Abstützelementes (PA) einzugreifen, wobei diese Vorrichtung Verteilungselemente für Abstützsteile (PA) umfasst, die dazu geeignet sind, die anfänglich in einem Speicher in einer Verschraubungszone (ZV) aufgestapelten Abstützteile (PA), zuzuführen, wobei es Schraubenverteilungselemente gestatten, die Schrauben (V₁ bis V₃) eine nach der anderen koaxial zur Bohrungsstelle (PE) des Abstützelementes (PA) zu befördern, wenn letztere in der Verschraubungszone (ZV) positioniert ist, und Verschraubungsmittel, von denen mindestens ein Schraubenende (51) koaxial · zur besagten Schraube und der genannten Bohrung (FE) hin beweglich ist, so dass es mit dem Schraubenkopf in Eingriff kommt und so die Verschraubung erfolgt, **dadurch gekennzeichnet, dass** die besagten Verteilungsmittel der Abstützsteile (PA) folgendes umfassen:
- Abstütz- und Führungselemente, die so angeordnet sind, um die von den Verteilungselementen zugeführten Abstützelemente (PA) aufzunehmen,
- ein in horizontaler Richtung beweglicher Schieber (T) zwischen den Träger- und Führungsteilen (G₁, G₂) und den Verteilungselementen, wobei dieser Schieber zur Verschiebung jedes über die Verteilungselemente ausgelieferte Abstützelementes entlang der Träger- und Führungselemente bestimmt ist, bis zu einer oberhalb eines Schachtes liegenden Zone, die in die Verschraubungszone (ZV) mündet,
- einziehbare Träger- und Führungselemente (TG₁, TG₂), die unterhalb der Träger- und Führungsmittel (G₁, G₂), liegen, und die einstückig mit dem Schieber ausgeführt sind, so dass das Abstützelement, wenn es sich oberhalb des genannten Schachtes befindet, auf die einziehbaren Trägerelemente fällt, dass die Schraubenspitze in die Bohrung dieses Abstützteils eingreift und dass der Rücklauf des Schiebers in seine Ausgangsposition den Einzug der genannten einziehbaren Trägerteile bewirkt, wobei dieser Rückzug die Versetzung des Abstützelementes (PA) in die Verschraubungszone (ZV) unter der Wirkung ihres Gewichtes und von dem der in die Bohrung eingreifenden Schraube bewirkt.

2. Vorrichtung nach Anspruch 1, **dadurch gekennzeichnet, dass** die Abstützelemente (PA) eine Ovalform mit zwei parallelen Längsrändem aufweist, und dadurch, dass der Schieber (T) aus einer Platine besteht, die mit einer verlängerten Ausnehmung (EV₄) von einer deutlich größeren Breite als die der Abstützelemente (PA) versehen ist, wobei diese Ausnehmung parallel zur Verschiebungsachse der Platine ausgerichtet ist.

3. Vorrichtung nach Anspruch 2, **dadurch gekennzeichnet, dass** die Abstützteile (PA), die im Lager aufbewahrt sind (M; 24 bis 26), schräg zur genannten Achse ausgerichtet sind und dass Mittel vorgesehen sind, um das erste Abstützteil (PA) des Stapels so zu drehen, damit es (dieses allein) in die Ausnehmung des Wagens (EV₄) eingreifen kann, und von letzterem bis zu den einziehbaren Trägerteilen mitgenommen werden kann (TG₁, TG₂).

4. Vorrichtung nach Anspruch 3, **dadurch gekennzeichnet, dass** das besagte Lager, die Verteilungsmittel und die Ausnehmung des Wagens so konzipiert sind, um die Verteilung von länglichen ovalförmigen undloder viereckigen Abstützteilen zu sichern.

5. Vorrichtung nach einem der vorherigen Ansprüche, **dadurch gekennzeichnet, dass** die Schrauben (V₁ bis V₃) auf geschmeidigen Trägerprofilen (S) abnehmbar vormontiert sind, um parallel und auf einem vorgegebenen Abstand zueinander angeordnet zu werden (pas), indem ein Band gebildet wird.

6. Vorrichtung nach dem Anspruch 5, **dadurch gekennzeichnet, dass** der Schraubenverteiler folgendes umfasst:
- Führungsmittel des Trägerprofils (S), die die Schrauben bis zum Eingang des Verteilers tragen,
- Greifmittel der ersten Schraube (V₃) des Bandes, die eine Verschiebung durchführen, um auf der Schraube in Eingriff zu kommen und eine Verschiebungsbewegung 5 vorzunehmen, um diese Schraube auf eine Art von Rampe (42) zu schieben, wobei das Herausziehen des Bandes bewirkt und das Profilstück (S) vorgeschoben wird,
- Führungsmittel (42') dienen dazu, um die Schraube (V₃), die in einer koaxialen Position aus dem Band herausgezogen wurde, der Bohrungsstelle (PE) des Abstützteiles (PA) in der Verschraubungszone (ZV) zuzuführen,
- einziehbare Haltemittel (45, 46), die dazu vorgesehen sind, um die Schraube (V₃) oberhalb der Verschraubungszone (ZV) zurückzuhalten, so dass ein Abstützteil (PA) in dieser Verschraubungszone (ZV) nicht vorhanden ist.

7. Vorrichtung nach Anspruch 6, **dadurch gekennzeichnet, dass** die besagten Greifmittel ein im Schnitt U-förmiges Ausziehteil (31) umfassen, dessen Flügel (32, 33) auf der Ebene ihrer Umrandungen je zwei koaxiale Einschnitte (34, 35) umfassen, wobei dieses Teil (31) so ausgelegt ist, dass die beiden Flügel (32, 33) auf beiden Seiten des Trägerprofils (S) so eingreifen können, dass der erste Schraubenstift (V₃) des Bandes in die Einschnitte eingeführt werden kann.

8. Vorrichtung nach Anspruch 7, **dadurch gekennzeichnet, dass** das besagte Ausziehstück (31) drehbar gegen die Wirkung von Federmitteln (36) auf einem in senkrechter Richtung beweglichen Schieber (37) montiert ist, der durch eine Rutsche geführt ist, die einstückig mit der festen Struktur der Vorrichtung gebildet ist.

9. Vorrichtung nach einem der Ansprüche 6 bis 8, **dadurch gekennzeichnet, dass** der Schraubenverteiler außerdem ein Anschlagstück umfasst, das aus einem, eine Spitze (39) aufweisenden, Schwinghebel (38) besteht, wobei das Umkippen dank eines im Hebel (38) vorgesehenen Nockenprofils gesichert wird, worauf ein einstückiges Teil (40) mit dem Ausziehteil (31) läuft.

10. Vorrichtung nach einem der vorangehenden Ansprüche, **dadurch gekennzeichnet, dass** diese eine starre Struktur (Fahrgestell) umfasst, die aus einem Sockel, der auf Räder montiert ist, und einer senkrechten Rutsche gebildet ist, auf welcher ein Wagen gleitet, der ein Richtkorn mit Griffen trägt, zwecks gleichzeitiger Sicherung von Rollverschiebungen der Vorrichtung und um es zu gestatten, eine senkrechte Verschiebung zur senkrecht ausgerichteten Anschraubmaschine einzuprägen und das besagte Schraubenende zu tragen.

11. Vorrichtung nach Anspruch 10, **dadurch gekennzeichnet, dass** das besagte Schraubenende auf einem Stift montiert ist, um eine gesamte Einheit zu bilden, die in einem rohrförmigen koaxial zum Durchbruch verlaufenden Zentrier- und Führungsgehäuse des in der Verschraubungszone (ZV) angeordneten Abstützteils eingreift und gleitet, und in welcher eine Führungsvorrichtung von hinter der besagten Ausziehvorrichtung liegenden Schrauben mündet.

12. Vorrichtung nach Anspruch 11, **dadurch gekennzeichnet, dass** das besagte Gehäuse in seinem oberen Teil zeitweise Haltemittel des Schraubenkopfes umfasst.

13. Vorrichtung nach einem der Ansprüche 11 und 12, **dadurch gekennzeichnet, dass** das besagte Gehäuse eine Zentriervorrichtung für Schrauben umfasst, die radiale durch Federn beanspruchte Druckknöpfe umfasst.

14. Vorrichtung nach einem der Ansprüche 10 bis 13, **dadurch gekennzeichnet, dass** die besagten Verteilungsmittel von Abstützteilen eine austauschbare bausteinförmige Struktur darstellen und Mittel umfassen, wodurch ihre schnelle Montage auf dem besagten Fahrgestell und Demontage ermöglicht ist, um den Gebrauch von Abstützteilen verschiedener Formen und Abmessungen zu gestatten.

## Claims

1. Apparatus for the screwing in fastening elements manufactured in at least two parts, one of which is composed of a support element (PA) while the other consists of a screw (V₁ to V₃) which has to fit into a drilled hole (PE) in the support element (PA) during the screwing operation, where this apparatus comprises means for the dispensing of support elements (PA) capable of conveying the support elements (PA) initially stacked in a magazine, one by one, into a screwing zone (ZV), and where means for the dispensing of screws enables the conveyance, one by one, of the screws (V₁ to V₃) coaxially with the location of the drilled hole (PE) in the support element (PA) when the latter is positioned in the screwing zone (ZV), together with the resources employed for the screwing operation, comprising at least one screwdriver adapter (51) which is mobile in translation coaxially with the said screw and with the said drilled hole (PE) so as to engage with the head of the screw and to perform the screwing action, **characterised in that** the aforementioned means for the dispensing of support elements (PA) comprise:
support and guidance resources positioned so as to receive the support elements (PA) delivered by the dispensing resource,
a carrier (T) which is mobile in horizontal translation between the support and guidance resources (G₁, G₂) and the dispensing resource, this carrier being intended to move each support element delivered by the dispensing resource along the length of the support and guidance resources up to a zone located above a well opening into the screwing zone (ZV),
retractable support elements (TG₁, TG₂) located below the support and guidance resources (G₁, G₂) and solidly attached to the carrier so that when the latter is located above the said well, the support element drops onto the retractable support elements, that the point of the screw engages in the drilled hole of this support element, and that the return of the carrier to its initial position causes the retraction of the said retractable support elements, this retraction causing the transfer of the support element (PA) into the screwing zone (ZV) under the effect ofits weight and that of the screw engaged in the drilled hole.

2. An apparatus according to claim 1, **characterised in that** the support elements (PA) are of oblong shape, comprising two parallel longitudinal edges, and **in that** the carrier (T) consists of a plate equipped with a long cut-out (EV₄) whose width is significantly greater than that of the support elements (PA), where the axis of this cut-out is parallel to the movement axis of the plate.

3. An apparatus according to claim 2, **characterised in that** the axes of the support elements (PA), stored in the magazine (M; 24 to 26), are oblique in relation to the said axis, and the means are then provided to cause the first support element (PA) of the stack to pivot so as to enable it (and it alone) to engage in the cut-out of the carrier (EV₄), and to be capable of being driven by the latter up to the retractable support elements (TG₁, TG₂).

4. An apparatus according to claim 3, **characterised in that** the aforementioned magazine, the dispensing resource, and the cut-out in the carrier, are all designed so as to cater for the distribution of support elements of oblong shape and/or of square shape.

5. An apparatus according to one of the preceding claims, **characterised in that** the screws (V1 to V₃) are pre-mounted in a detachable manner onto flexible support channelling (S) so that they are placed in parallel with each other and mutually spaced at a predetermined distance (pitch) to form a strip.

6. An apparatus according to claim 5, **characterised in that** the screw dispenser comprises:
means for guiding the support channelling (S) canying the screws to the input of the dispenser,
means for grasping the first screw (V₃) on the strip, which executes a movement in order to engage with the screw and a movement in translation in order to bring this screw onto a ramp (42) causing its extraction from the strip and causing the channelling (S) to advance,
a guidance resource (42') designed to bring the screw (V₃), which has been extracted from the strip, into a position which is coaxial with the location of the drilled hole (PE) in the support element (PA) in the screwing zone (ZV), means for the holding in retraction (45, 46), provided to hold the screw (V₃) above the screwing zone (ZV) while a support element (PA) is not present in this screwing zone (ZV).

7. An apparatus according to claim 6, **characterised in that** the aforementioned grasping resource comprises an extraction part (31) with a U-shaped section whose wings (32, 33) comprise two mutually coaxial notches in their edges (34, 35), this part (31) being dimensioned in such a manner that the two wings (32, 33) are able to engage on either side of the support channelling (S) so that the shaft of the first screw (V₃) on the strip can be moved into the notches.

8. An apparatus according to claim 7, **characterised in that** the aforementioned extraction assembly (31) is mounted so that it pivots against the action of elastic elements (36) on a slider (37) which is mobile in vertical translation, guided by a slide which is solidly attached to the fixed structure of the apparatus.

9. An apparatus according to one of claims 6 to 8, **characterised in that** the screw dispenser also comprises a stop element consisting of an oscillating lever (38) with a projeckon (39) which is rotated by means of a cam profile created in the lever (3 8), on which there rotates a part (40) which is solidly attached to the extraction assembly (31).

10. An apparatus in accordance with one of the preceding claims, **characterised in that** it comprises a rigid structure (chassis) composed of a base mounted on wheels and a vertical slide on which there runs a carrier, carrying a control bar fitted with handles used both to move the apparatus on rollers and to allow the execution of a movement in translation of an electric screwdriver with vertical axis and equipped with the aforementioned-screwdriver adapter.

11. An apparatus according to claim 10, **characterised in that** the aforementioned screwdriver adapter is mounted on a shaft to form an assembly which engages and slides in a tubular centring guidance barrel that is coaxial with the drilled hole in the support element located in the screwing zone (ZV), and into which there opens out a device for the guidance of the screws, located downstream of the aforementioned extraction assembly.

12. An apparatus according to claim 11, **characterised in that** the aforementioned barrel comprises, in its upper part, means for the temporary retention of the screw head.

13. An apparatus according to one of claims 11 and 12, **characterised in that** the aforementioned barrel comprises a device for centring of the screws, consisting of radial push elements driven by springs.

14. An apparatus according to one of claims 10 to 13, **characterised in that** the aforementioned means for the distribution of support elements has an interchangeable modular structure and comprises the means to allow them to be rapidly fitted to and removed from the aforementioned chassis, so as to allow the use of support elements of various shapes and dimensions.
